# EUROPEAN PATENT APPLICATION

(11) **EP 0 647 893 A1**
(43) Date of publication of application: **12.04.1995**
(21) Application number: 94910043.2
(22) Date of filing: 17.03.1994
(51) Int. Cl.: G05B 19/18, G05B 19/414, G05B 19/408

(54) **METHOD FOR TRANSFERRING CNC DATA**

(30) Priority: 29.03.1993 JP 70019/93
(71) Applicant: FANUC LTD., Minamitsuru-gun, Yamanashi 401-05 (JP)
(72) Inventor: INOUE, Hideaki, Tama-shi, Tokyo 206 (JP); ICHIJO, Masahito, Fanuc Dai-3 Villa-karamatsu, Minamitsuru-gun, Yamanashi 401-05 (JP)
(74) Representative: Brunner, Michael John
(86) International application number: JP9400442
(87) International publication number: WO9423350

(57) **Abstract**

A CNC apparatus capable of transferring data from an external device with ease at a high speed. In a numerical controller (1), a hard disk device (HDD) (3) is incorporated. The hard disk device (3) is connected to a personal computer (2) through an interface (4). The interface (4) is a parallel communication interface such as SCSI. In the personal computer (2), data on the numerical controller (1) are prepared. The data thus prepared are transferred to the hard disk device (3) in the numerical controller (1) through the interface (4).

## Description

### Technical Field

The present invention relates to a data transfer system for a computer numerical control apparatus (CNC) for transferring data from an external device to the CNC, and more particular to a data transfer system for a CNC for transferring data prepared using a personal computer or the like.

### Background Art

A typical method for allowing a computer numerical control apparatus (CNC) to read in data from an external device generally uses a floppy disk. One problem associated with this method is that a lot of time is required for reading data.

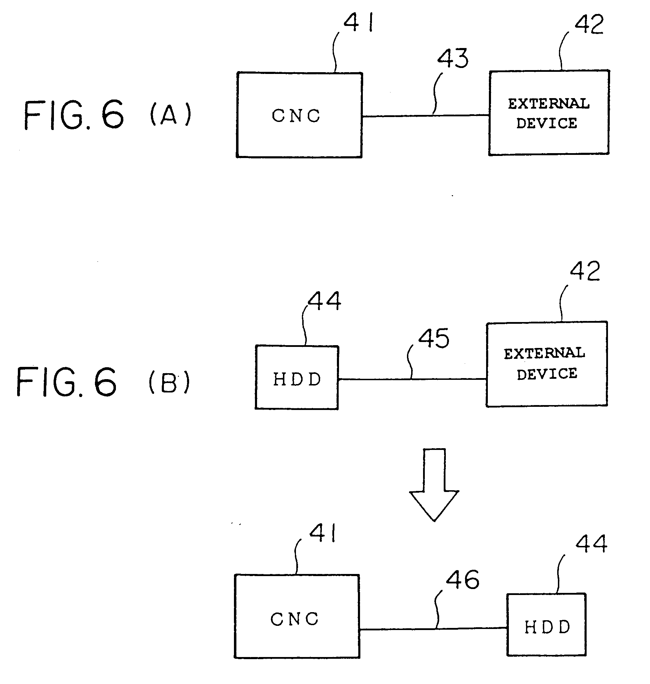

Conventionally, a system has been popular in which an external device 42 such as a personal computer or the like and a CNC 41 are directly connected via an interface 43 such as an RS 232C or the like as shown in FIG. 6(A). According to this system, data are supplied in a serial transfer fashion, so that data transfer rate is low. In addition, in order to transfer data, the same communication software must be provided respectively in the CNC 41 and the external device 42, and system setting is difficult.

Accordingly, more recently, another system has been proposed which transfers data from the external device 42 to a hard disk drive (HDD) 44 via an interface 45, then transfers the data from the HDD 44 to the CNC 41 via an interface 46. The interfaces 45 and 46 belong to a kind of parallel communication interfaces like a small computer system interface (SCSI). Owing to this system, data can be transferred at higher rate without using a special software.

Although this system would basically solve the abovementioned problem, it has a disadvantage that working efficiency is low, because it needs two interfaces for one data transfer.

### Disclosure of the Invention

In view of the above problem, it is an object of the present invention to provide a data transfer system for a CNC by which data can be transferred more easily at higher rate than those of the prior art.

To achieve the above object, there is provided in accordance with the present invention a data transfer system for a CNC for transferring data from an external device to the CNC, wherein a hard disk drive which is electrically connectable to both the CNC and the external device is incorporated in the CNC.

As the hard disk drive which can be electrically connected to both the CNC and external device is incorporated in the CNC according to the present invention, data can be easily transferred only by connecting between the CNC and the external device.

Further, as the CNC and the external device can independently read/write data from/to the hard disk drive, data can be transferred at higher rate without using special means like a communication software or the like.

### Brief Description of the Drawings

FIG. 1 is a schematic diagram of a configuration of a data transfer system in accordance with the present invention;
FIG. 2 is a block diagram illustrating an internal configuration of a computer numerical control apparatus (CNC) 1;
FIG. 3 is a block diagram of a hard disk drive;
FIG. 4 is a flow chart illustrating the manner by which data are read from an external hard disk drive to a hard disk drive;
FIG. 5 is a flow char illustrating the manner by which data are transferred from a hard disk drive to a RAM in a CNC; and
FIG. 6 (A) and FIG. 6 (B) each is a view illustrating a conventional data transfer system, more specifically, FIG. 6 (A) shows a view illustrating the data transfer system in which a CNC and an external device are connected directly, and FIG. 6 (B) shows a view illustrating the data transfer system in which data are transferred via a hard disk drive.

### Best Mode for Carrying Out the Invention

One embodiment of the present invention will be described below with reference to the drawings.

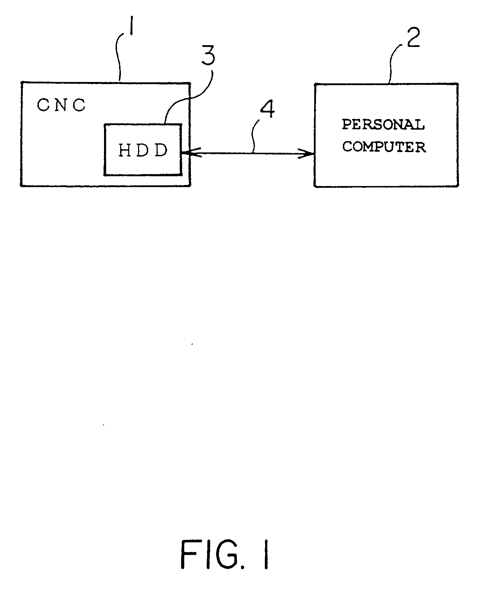

FIG. 1 schematically illustrates a configuration of a data transfer system according to an embodiment of the present invention. A computer numerical control apparatus (CNC) 1 is, for example, an interactive CNC. The CNC 1 is provided with a hard disk drive (HDD) 3 therein. The HDD 3 is connected to a personal computer 2 via an interface 4. The interface 4 is a parallel communication interface such as an SCSI interface and the like.

Data for the CNC 1 is prepared using the personal computer 2 and transferred to the hard disk drive 3

incorporated in the CNC 1 via the interface 4. In the hard disk drive 3, an adequate software corresponding to the interface 4 has been stored in advance. Thereby the CNC 1 and the personal computer 2 can read/write data from/to the HDD 3 by the same operation to a general external memory.

Instead of the personal computer 2, an external hard disk drive may be connected to the CNC 1.

Data mentioned above include tool compensation data (tool number and tool offset amount), work zero offset data, custom macro variable data, tool life management data, pitch error compensation data and the like.

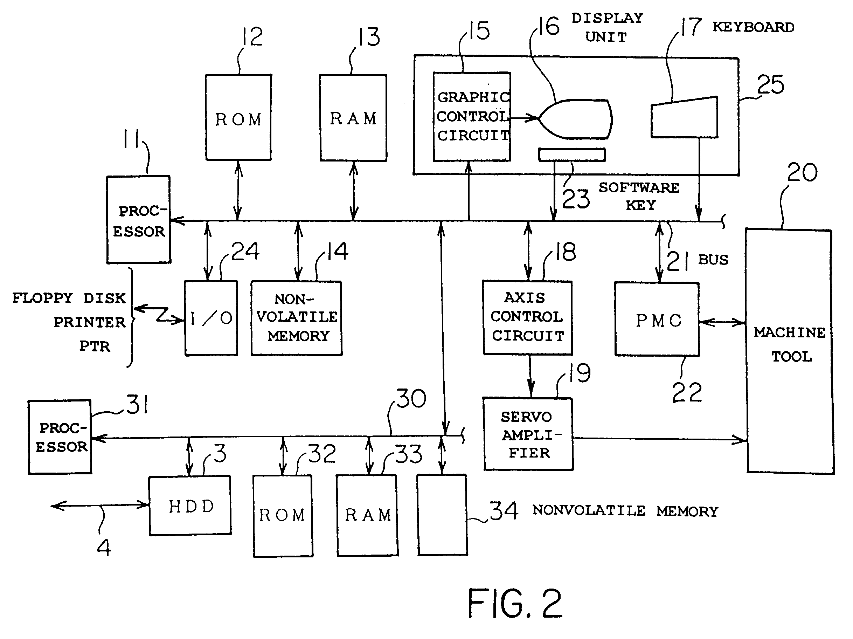

FIG. 2 is a block diagram illustrating an internal configuration of the CNC 1.

A processor 11 controls the entire CNC 1 in accordance with a system program stored in a ROM 12 which comprises an EPROM or an EEPROM. A RAM 13, comprising SRAM or the like, stores various data and an input/output signal. A nonvolatile memory 14, comprising a CMOS which is backed up by a battery not shown, stores the data such as a parameter, a pitch error compensation amount, a tool offset amount, etc. which are necessary to be maintained after the power supply is shut off.

A graphic control circuit 15 converts a digital signal to a signal for graphic display and supplies the converted signal to a display unit 16. The display unit 16 comprises a CRT or a liquid crystal display unit. When a machining program is created interactively, the display unit 16 displays a profile of a workpiece, a machining condition, and the like.

Symbolic keys, numerical keys, and the like are included on a keyboard 17 through which necessary graphic data and NC data are entered.

An axis control circuit 18 transmits an axis move command from the processor 11 to a servo amplifier 19. In response to the move command, the servo amplifier 19 drives a servo motor of a machine tool 20. The abovementioned components are connected by a common bus 21.

A programmable machine controller (PMC) 22 receives a T function signal (tool selection command) and the like via the bus 21 during execution of an NC program. Then the received signal is processed using a sequence program and fed out as an operation command to control the machine tool 20. Also the PMC 22 receives a state signal from the machine tool 20, applies sequential processing to the signal, and transfers a necessary input signal to the processor 11 via the bus 21.

To the bus 21 are connected a software key 23 whose function varies depending on a system program and the like, and a serial interface 24 through which NC data are supplied to an external equipment such as a floppy disk drive (FDD), printer, paper tape reader (PTR), etc. The software key 23 is provided on a CRT/MDI panel 25 together with the abovementioned display unit 16 and the keyboard 17.

Moreover, as well as the processor 11 which is a CPU for an NC, an interactive processor 31 having a bus 30 is connected to the bus 21. To the bus 30, a ROM 32, RAM 33 and a nonvolatile memory 34 are connected.

An interactive data input screen to be displayed on the display unit 16 mentioned above is stored in the ROM 32. On the interactive data input screen, a movement path of an entire tool is displayed as a back ground animation during creation of an NC statement. Moreover, on the display unit 16, operations and data which can be selected from the input screen are listed in a menu format. Selection of an menu item is carried out using the software keys 23 provided at the bottom of the screen. Meaning of the software key 23 varies for each screen. The RAM 33, comprising an SRAM or the like, stores various data for interactive operations.

Supplied data are processed by the interactive processor 31 and a workpiece machining program is generated. The generated program data are sequentially displayed as a background animation on the display unit 16 which is interactively used. On the other hand, the workpiece machining program stored in the nonvolatile memory 34 as an NC statement is executed during machining simulation of the machine tool 20 and displayed as a foreground animation.

In addition, to the bus 30, the abovementioned hard disk drive 3 is connected. Data written into the HDD 3 via the interface 4 are temporarily stored in the RAM 33 and also sent to the RAM 13 as required.

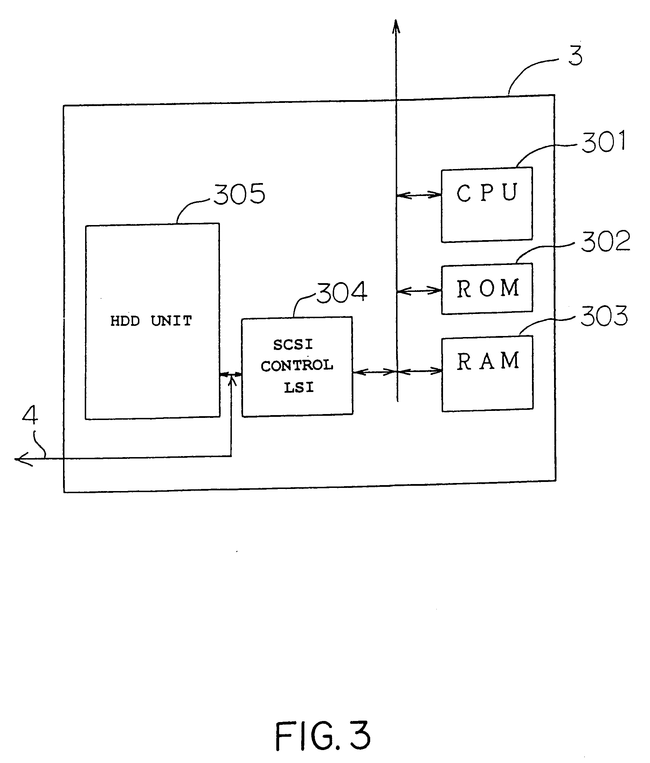

Next, the hard disk drive will be described below in detail. FIG. 3 is a block diagram of the HDD. The HDD 3 is composed of a processor (CPU) 301, a ROM 302, a RAM 303, an SCSI control LSI 304, and an HDD unit 305. The HDD unit 305 has a hard disk, a head, an R/W control circuit, a disk drive circuit, and the like.

As shown in FIG. 1, when the personal computer 2 is connected external to the CNC, data are directly transferred from the personal computer 2 to the HDD unit 305. When an external HDD is connected instead of the personal computer 2, data from the external HDD is temporarily stored in a buffering area in the RAM 303 via the SCSI control LSI 304 and then transferred to the HDD unit 305 via the SCSI control LSI 304.

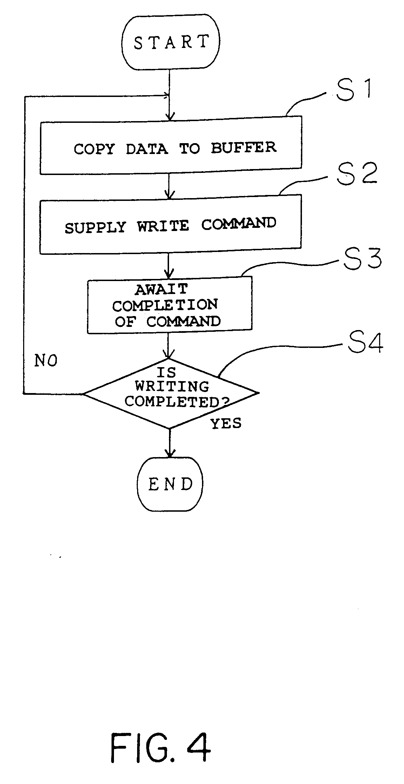

Then the data transfer procedure when an external HDD is connected to the CNC is described below. FIG. 4 is a flow chart illustrating the manner by which data are read from an external HDD into an incorporated HDD.

A numeral following letter "S" represents a step number.
[S1] In step S1, the processor 301 copies data from the external HDD to a buffer of the RAM 303.
[S2] In step S2, the processor 301 supplies a WRITE command to the HDD unit 305.
[S3] In step S3, the processor 301 awaits completion of the WRITE command and proceeds to the next step in response to the end signal.
[S4] In step S4, if writing (transferring) of data from the external HDD has not been completed, the abovementioned step S1 to S3 are repeated.

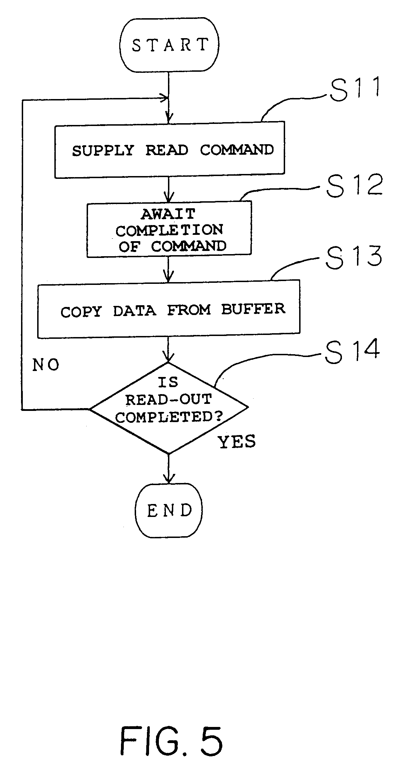

Next, the processing to transfer the data supplied from the external HDD to the RAM 33 or the RAM 13 (FIG. 2) in the CNC will be described below. FIG. 5 is a flow chart illustrating the manner by which data are transferred from a HDD to a RAM in a CNC;
[S11] In step S11, the processor 301 supplies a READ command to the HDD unit.
[S12] In step S12, the processor 301 awaits completion of the READ command and proceeds to the next step in response to the end signal.
[S13] In step S13, the processor 301 copies data from the buffer of the HDD unit 305 to transfer to the RAM 13 or the like.
[S14] In step S14, if reading (transferring) of data has not been completed, the abovementioned step S11 to S13 are repeated.

Therefore, in accordance with the embodiment of the present invention, the HDD 3 is incorporated in the CNC 1 and the CNC 1 and the personal computer 2 or the external HDD are connected via the HDD 3 to transfer data, thereby both the CNC and the personal computer or the external HDD are not required to be provided with a special communication software or the like and data can be transferred at high rate with simple connection operations.

Moreover, when the CNC 1 and the personal computer 2 is being connected, the HDD 3 can be used as a shared expansion memory.

As described above, in accordance with the present invention, the HDD which is electrically connectable to both the CNC and the external device is incorporated in the CNC, thereby data can be transferred easily only by connecting the CNC and the external device.

Further, each of devices can independently read/write data from/to the HDD, thereby data can be transferred at higher rate without using a special means such as a communication software and the like.

## Claims

1. A data transfer system for a computer numerical control apparatus (CNC) for transferring data from an external device to the CNC, comprising:
a hard disk drive (HDD) incorporated in the CNC, which can be electrically connected to both the CNC and the external device.

2. A data transfer system according to claim 1, wherein said CNC and said external device are connected to said HDD via a parallel communication interface.

3. A data transfer system according to claim 2, wherein said parallel communication interface is a small computer system interface (SCSI).
